# EUROPÄISCHE PATENTANMELDUNG

(11) **EP 4 775 609 A1**
(43) Veröffentlichungstag der Anmeldung: **15.07.2026**
(21) Anmeldenummer: 25151706.6
(22) Anmeldetag: 14.01.2025
(51) Int. Cl.: C08G 18/00, C08G 18/12, C08G 18/32, C08G 18/40, C08G 18/48, C08G 18/50, C08G 18/69, C08G 18/76, C08G 59/50, C09J 175/04

(54) **AMIN-FUNKTIONELLES ADDUKT VON ISOCYANATGRUPPEN-HALTIGEM POLYMER MIT POLYBUTADIEN-KETTEN**

(71) Anmelder: Sika Technology AG, 6340 Baar (CH)
(72) Erfinder: KASEMI, Edis, 8048 Zürich (CH); BURCKHARDT, Urs, 8048 Zürich (CH); ILLI, Tobias, 8048 Zürich (CH); KRAMER, Andreas, 8048 Zürich (CH); STADELMANN, Ursula, 8048 Zürich (CH)
(74) Vertreter: Sika Patent Attorneys

(57) **Zusammenfassung**

Gegenstand der Erfindung ist ein Amin-funktionelles Addukt erhalten aus der Umsetzung von mindestens einem Diamin der Formel (I) mit mindestens einem Isocyanatgruppen-haltigen Polymer mit einem Gehalt an Polybutadien-Ketten von mindestens 20 Gewichts-% in einem Verhältnis der Anzahl Mol Diamin der Formel (I) pro Molequivalent Isocyanatgruppen von mindestens 1.3.

Das Amin-funktionelle Addukt ist in einem einfachen Verfahren herstellbar und ermöglicht Epoxidharz-Klebstoffe mit guter Verarbeitbarkeit, hoher Festigkeit und sehr hoher Schlagzähigkeit.

## Beschreibung

### Technisches Gebiet

Die Erfindung betrifft Amin-funktionelle Addukte aus der Umsetzung von Diaminen mit Isocyanatgruppen-haltigen Polymeren und ihre Verwendung in härtbaren Zusammensetzungen, insbesondere in Klebstoffen mit hoher Schlagzähigkeit.

### Stand der Technik

Epoxidharz-Klebstoffe ermöglichen hohe Haftkräfte auf unterschiedlichen Substraten. Sie sind aber typischerweise kaum dehnbar und wenig schlagzäh. Für Anwendungen, wo eine hohe Schlagzähigkeit der Verklebung gefordert ist oder wo starke Erschütterungen und Bewegungen auftreten, sind klassische Epxoidharz-Klebstoffe oft zu spröd. Für solche Anwendungen wurden schlagzähmodifizierte (toughened) Epoxidharz-Produkte entwickelt, beispielsweise für Verklebungen an einer Fahrzeug-Karosserie mit hoher Crashfestigkeit. Dabei enthält der ausgehärtete Klebstoff als Schlagzähmodifikator bzw. Toughener fein verteilte, an die Epoxidharz-Matrix angebundene flexible Polymere, welche bei einem Crash mechanische Energie aufnehmen und dadurch die Rissfortpflanzung im Klebstoff stark reduzieren können. Bekannt als Toughener ist beispielsweise funktionalisierter flüssiger Gummi, wie zum Beispiel ATBN (amine-terminated butadiene-acrylonitrile copolymer) oder ETBN (epoxy-terminated butadiene-acrylonitrile copolymer), wobei diese hochviskos und teuer sind und bei der Tieftemperaturflexibilität Nachteile aufweisen.

US 2021/0198537 beschreibt mittels einem toughened Epoxidharz-Klebstoff verklebte Metalle. Als Schlagzähmodifikator (Toughener) beschrieben sind unter anderem Polyurethane, insbesondere Isocyanatgruppen-haltige Polymere, welche mit einem Epoxidharz oder mit Cardanol blockiert sind. Solche Klebstoffe verfügen über eine hohe Kälteflexibilität. Die mittels Epoxidharz blockierten Toughener sind aber sehr hochviskos, und bei den mittels Cardanol blockierten Toughenern wird bei der Aushärtung Cardanol freigesetzt, welches im ausgehärteten Klebstoff unerwünscht weichmachend wirken und aus dem Klebstoff migrieren kann.

US 2016/0280844 beschreibt Amin-funktionelle Addukte aus der Umsetzung von Polyether-Aminobenzoaten mit monomeren Diisocyanaten und ihre Verwendung als Härter für Epoxidharze.

US 3'248'424 beschreibt Amin-funktionelle Addukte aus der Umsetzung von Diaminen mit Isocyanatgruppen-haltigen Polyetherpolymeren und erwähnt deren Verwendung als Härter für Isocyanate.

US 7'001'972 beschreibt Amin-funktionelle Addukte von Polyaminen mit Isocyanatgruppen-haltigen Polymeren, deren Isocyanatgruppen mittels Phenolgruppen-haltigen Harzen blockiert sind. Solche Addukte enthalten die dabei freigesetzten Phenolgruppen-haltigen Harze, was aus toxikologischen Gründen und wegen Problemen mit Migration unerwünscht ist.

### Darstellung der Erfindung

Aufgabe der vorliegenden Erfindung ist es, einen als Schlagzähmodifikator für Epoxidharz-Klebstoffe einsetzbaren Härter zur Verfügung zu stellen, welcher die Nachteile des Standes der Technik in Bezug auf hohe Viskosität und freigesetzte Abspalter überwindet.

Überraschenderweise wird diese Aufgabe mit einem Amin-funktionellen Addukt wie in Anspruch 1 beschrieben gelöst. Das Addukt wird erhalten aus der Umsetzung von mindestens einem Diamin der Formel (I) mit einem Isocyanatgruppen-haltigen Polymer mit einem Gehalt an Polybutadien-Ketten von mindestens 20 Gewichts-%. Das erfindungsgemässe Addukt ist in einem einfachen Verfahren aus gut erhältlichen, preisgünstigen Grundstoffen herstellbar. Es ist lagerstabil und bei Raumtemperatur insbesondere flüssig und gut handhabbar. Es ist dadurch besonders einfach einsetzbar als Härter und/oder Schlagzähmodifikator für Epoxidharz-Zusammensetzungen, sowie als Härter für Zusammensetzungen mit weiteren gegenüber Aminen reaktiven Reaktivgruppen, wie insbesondere Isocyanatgruppen oder Acetoacetatgruppen.

Besonders geeignet ist das erfindungsgemässe Addukt als Bestandteil eines Härters für Epoxidharze. Das erfindungsgemässe Addukt ermöglicht dabei eine gute Verarbeitbarkeit, eine hohe Festigkeit und eine besonders hohe Schlagzähigkeit. Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Amin-funktionelles Addukt erhalten aus der Umsetzung von
- mindestens einem Diamin der Formel (I), 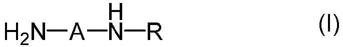 wobei A für einen gegebenenfalls Ether-Sauerstoff enthaltenden zweiwertigen Kohlenwasserstoffrest mit 2 bis 25 C-Atomen steht und R für H oder für einen einwertigen, gegebenenfalls Sauerstoffatome enthaltenden Kohlenwasserstoffrest mit 1 bis 12 C-Atomen steht,
   mit
   - mindestens einem Isocyanatgruppen-haltigen Polymer mit einem mittleren Molekulargewicht Mₙ von mindestens 1'000 g/mol und einem Gehalt an Polybutadien-Ketten bezogen auf das Isocyanatgruppen-haltige Polymer von mindestens 20 Gewichts-%,

in einem Verhältnis der Anzahl Mol Diamin der Formel (I) pro Molequivalent Isocyanatgruppen von mindestens 1.3.

Als "Molekulargewicht" wird die molare Masse (in Gramm pro Mol) eines Moleküls bezeichnet. Als "mittleres Molekulargewicht" wird das Zahlenmittel des Molekulargewichts Mₙ einer polydispersen Mischung von oligomeren oder polymeren Molekülen bezeichnet. Es wird mittels Gelpermeationschromatographie (GPC) gegen Polystyrol als Standard bestimmt.

Als "NCO-Gehalt" wird der Gehalt an Isocyanatgruppen in Gewichts-% bezeichnet. Mit "Poly" beginnende Substanznamen wie Polyol, Polyepoxid oder Polyacetoacetat bezeichnen Substanzen, die formal zwei oder mehr der in ihrem Namen vorkommenden funktionellen Gruppen pro Molekül enthalten.

Als "primäre Amingruppe" wird eine Amingruppe bezeichnet, die an einen einzigen organischen Rest gebunden ist und zwei Wasserstoffatome trägt; als "sekundäre Amingruppe" wird eine Amingruppe bezeichnet, die an zwei organische Reste, welche auch gemeinsam Teil eines Rings sein können, gebunden ist und ein Wasserstoffatom trägt; und als "tertiäre Amingruppe" wird eine Amingruppe bezeichnet, die an drei organische Reste, welche auch zu zweit oder zu dritt Teil eines oder mehrerer Ringe sein können, gebunden ist und kein Wasserstoffatom trägt. Als "Aminwasserstoff" werden die Wasserstoffatome von primären und sekundären Amingruppen bezeichnet.

Als "Aminwasserstoff-Equivalentgewicht" wird die Masse eines Amins oder einer Amin-haltigen Zusammensetzung bezeichnet, die ein Molequivalent Aminwasserstoff enthält. Es wird angegeben in der Masseinheit "g/eq".

Als "Epoxid-Equivalentgewicht" wird die Masse einer Epoxidgruppen-haltigen Verbindung oder Zusammensetzung bezeichnet, die ein Mol-Equivalent Epoxidgruppen enthält. Es wird angegeben in der Masseinheit "g/eq".

Als "lagerstabil" wird ein Addukt oder eine Zusammensetzung bezeichnet, das oder die bei Raumtemperatur in einem geeigneten Gebinde während längerer Zeit, typischerweise während mindestens 3 Monaten bis zu 6 Monaten und mehr, aufbewahrt werden kann, ohne dass es sich in seinen Anwendungs- oder Gebrauchseigenschaften durch die Lagerung in einem für seinen Gebrauch relevanten Ausmass verändert.

Eine gestrichelte Linie in den Formeln in diesem Dokument stellt jeweils die Bindung zwischen einer Struktureinheit und dem zugehörigen Molekülrest dar.

Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%) bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Das Amin-funktionelle Addukt ist frei von Isocyanatgruppen.

Das Amin-funktionelle Addukt ist lagerstabil.

Das Reaktionsprodukt erhalten aus der Umsetzung des Diamins der Formel (I) mit dem Isocyanatgruppen-haltigen Polymer wird in diesem Dokument als Amin-funktionelles Addukt bezeichnet. Es enthält typischerweise eine Mischung aus Aminfunktionellem Polymer und nicht umgesetztem Diamin der Formel (I).

Im Fall eines linearen Isocyanatgruppen-haltigen Polymers enthält das Amin-funktionelle Addukt neben nicht umgesetztem Diamin der Formel (I) hauptsächlich die folgenden Addukt-Moleküle der Formel (II) und (III), 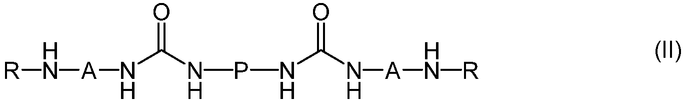 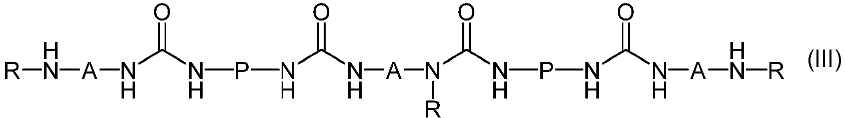 wobei P für den Rest des Isocyanatgruppen-haltigen Polymers nach Entfernung von zwei Isocyanatgruppen steht und A und R die bereits genannten Bedeutungen aufweisen. Im Fall von R ≠ H kann das Diamin der Formel (I) auch über die sekundäre Amingruppe adduktiert sein und beispielsweise die Formel (II') aufweisen.

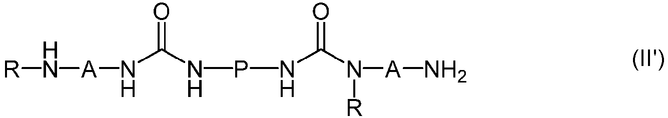

Ein Addukt-Molekül der Formel (II) bzw. (II') wird auch als "Monoaddukt" bezeichnet. Es enthält nur einen Rest P. Ein Addukt-Molekül der Formel (III) wird auch als "Diaddukt" bezeichnet. Es enthält zwei Reste P. Zusätzlich enthält das Addukt auch kleinere Anteile an höher adduktierten Bestandteilen, bei welchen mehr als zwei Reste P über Diamine der Formel (I) adduktiert sind.

Im Fall eines trifunktionellen Isocyanatgruppen-haltigen Polymers weist das Monoaddukt insbesondere die Formel (IIa) und das Diaddukt insbesondere die Formel

(Illa) auf, wobei Im Fall von R ≠ H das Diamin der Formel (I) auch über die sekundäre Amingruppe adduktiert sein kann.

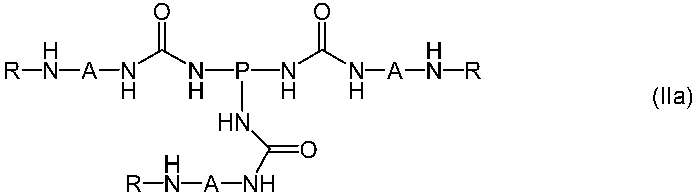

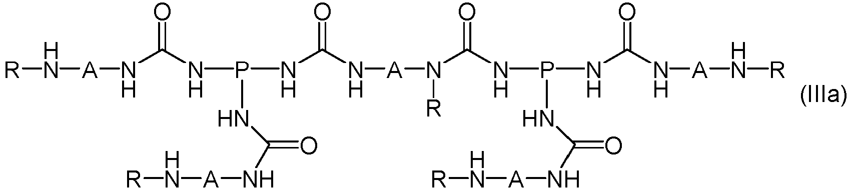

Ein hohes Verhältnis der Anzahl Mol Diamin der Formel (I) pro Molequivalent Isocyanatgruppen entspricht einem hohen Überschuss an Diamin der Formel (I) und begünstigt einen hohen Gehalt an Monoaddukt der Formel (II) bzw. (IIa) und einen vergleichsweise hohen Gehalt an nicht umgesetztem Diamin der Formel (I). Ein solches Addukt ist vergleichsweise niedrigviskos.

Ein geringeres Verhältnis der Anzahl Mol Diamin der Formel (I) pro Molequivalent Isocyanatgruppen entspricht einem geringeren Überschuss an Diamin der Formel (I) und begünstigt einen höheren Gehalt an höher adduktierten Bestandteilen und einen geringeren Gehalt an nicht umgesetztem Diamin der Formel (I). Ein solches Addukt ist vergleichsweise höher viskos.

Bevorzugt liegt das Verhältnis der Anzahl Mol Diamin der Formel (I) pro Molequivalent Isocyanatgruppen bei 1.5 bis 15, bevorzugt 1.6 bis 10, insbesondere 1.7 bis 7. Ein solches Addukt ist besonders geeignet für die beschriebenen Verwendungen. Es ermöglicht eine vorteilhafte Kombination aus niedriger Viskosität und hohem Polymergehalt.

Bevorzugt sind die beiden Stickstoffatome des Diamins der Formel (I) durch mindestens zwei C-Atome voneinander getrennt.

Bevorzugt sind die Amingruppen des Diamins der Formel (I) jeweils an ein aliphatisches C-Atom gebunden. Solche Amine sind toxikologisch besonders vorteilhaft.

Bevorzugt steht A für einen gegebenenfalls cyclische oder aromatische Anteile enthaltenden Alkylenrest mit 2 bis 13 C-Atomen oder für einen Polyetherrest mit 6 bis 25 C-Atomen, bevorzugt 9 bis 15 C-Atomen.

Besonders bevorzugt steht A für einen Alkylenrest mit 6 bis 13 C-Atomen, bevorzugt 8 bis 12 C-Atomen, oder für einen Polyetherrest mit 6 bis 25 C-Atomen, bevorzugt 9 bis 15 C-Atomen.

Bevorzugt weist das Diamin der Formel (I) insgesamt mindestens 6 C-Atome, insbesondere mindestens 8 C-Atome, auf. Ein solches Diamin ist vergleichsweise wenig flüchtig und geruchsarm.

Für den Fall, dass das Diamin der Formel (I) weniger als 6 C-Atome aufweist, werden nicht umgesetzte Anteile des Diamins der Formel (I) bevorzugt aus dem erhaltenen Addukt entfernt, insbesondere mittels Destillation.

Bevorzugt sind aber Addukte von Diaminen der Formel (I) mit insgesamt mindestens 6 C-Atomen, insbesondere mindestens 8 C-Atomen, bei welchen nicht umgesetzte Anteile des Diamins der Formel (I) nicht entfernt wurden.

Bevorzugt ist das Diamin der Formel (I) ausgewählt aus der Liste bestehend aus 1,5-Diamino-2-methylpentan (MPMD), 1,6-Hexandiamin, 1,7-Heptandiamin, 1,8-Octandiamin, 2,5-Dimethyl-1,6-hexandiamin, 1,9-Nonandiamin, 2,2(4),4-Trimethyl-hexan-1-6-diamin (TMD), 1,10-Decandiamin, 1,3-Bis(aminomethyl)cyclohexan, 1,4-Bis(aminomethyl)cyclohexan, 1,2-Diaminocyclohexan, 1,3-Diaminocyclohexan, 1,4-Diaminocyclohexan, Isophorondiamin (IPDA), 2(4)-Methyl-1,3-diaminocyclohexan, 2,5(2,6)-Bis(aminomethyl)bicyclo[2.2.1]heptan (NBDA), Bis(4-aminocyclohexyl)methan, 1,3-Bis(aminomethyl)benzol (MXDA), 3,6-Dioxaoctan-1,8-diamin, 4,7-Dioxadecan-1,10-diamin, 4,9-Dioxadodecan-1,12-diamin, 4,7,10-Trioxatridecan-1,13-diamin, Polyoxypropylendiaminen mit mittlerem Molekulargewicht Mₙ von 200 bis 500 g/mol, N-Benzyl-1,2-ethandiamin, N-Furfuryl-1,2-ethandiamin, N-Tetrahydrofurfuryl-1,2-ethandiamin, N-Benzyl-1,3-bis(aminomethyl)-benzol und N-Cyclohexyl-1,3-propandiamin.

Davon bevorzugt ist 1,8-Octandiamin, 2,5-Dimethyl-1,6-hexandiamin, 2,2(4),4-Trimethylhexan-1-6-diamin (TMD), 1,3-Bis(aminomethyl)cyclohexan, 1,2-Diaminocyclohexan, Isophorondiamin (IPDA), 2(4)-Methyl-1,3-diaminocyclohexan, Bis(4-aminocyclohexyl)methan, 1,3-Bis(aminomethyl)benzol (MXDA), 4,9-Dioxadode-can-1,12-diamin, 4,7,10-Trioxatridecan-1,13-diamin, Polyoxypropylendiamine mit mittlerem Molekulargewicht Mₙ von 200 bis 300 g/mol, Benzyl-1,2-ethandiamin, N-Furfuryl-1,2-ethandiamin oder N-Tetrahydrofurfuryl-1,2-ethandiamin.

Besonders bevorzugt als Diamin der Formel (I) ist 2,2(4),4-Trimethylhexan-1-6-diamin (TMD), 1,3-Bis(aminomethyl)cyclohexan, 1,3-Bis(aminomethyl)benzol (MXDA), 4,9-Dioxadodecan-1,12-diamin, 4,7,10-Trioxatridecan-1,13-diamin oder Polyoxypropylendiamine mit mittlerem Molekulargewicht Mₙ von 200 bis 300 g/mol wie insbesondere Jeffamine D-230 (von Huntsman) oder entsprechende Typen von BASF oder Nitroil.

In einer besonders bevorzugten Ausführungsform der Erfindung ist das Diamin der Formel (I) frei von cyclischen Strukturen, insbesondere ausgewählt aus 2,2(4),4-Trimethylhexan-1-6-diamin (TMD), 4,9-Dioxadodecan-1,12-diamin, 4,7,10-Trioxa-tridecan-1,13-diamin und Polyoxypropylendiamin mit mittlerem Molekulargewicht Mₙ von 200 bis 300 g/mol. Solche Diamine der Formel (I) ermöglichen eine ganz besonders hohe Schlagzähigkeit.

In einer bevorzugten Ausführungsform der Erfindung steht R in Formel (I) für H. Ein solches Diamin verfügt über zwei primäre Amingruppen. Es ist besonders einfach verfügbar, ermöglicht Addukte mit besonders hoher Reaktivität gegenüber Epoxiden und ermöglicht besonders hohe Schlagzähigkeiten.

In einer weiteren Ausführungsform der Erfindung steht R in Formel (I) für einen einwertigen, gegebenenfalls Sauerstoffatome enthaltenden Kohlenwasserstoffrest mit 1 bis 12 C-Atomen. Bevorzugt ist R dabei ausgewählt aus der Liste bestehend aus Methyl, Ethyl, Propyl, Butyl, Isobutyl, Pentyl, Hexyl, Heptyl, Octyl, 2-Ethylhexyl, Nonyl, Decyl, Undecyl, Dodecyl, Benzyl, 4-Methoxybenzyl, 3,4-Dimethoxybenzyl, Furfuryl, Tetrahydrofurfuryl und Naphthylmethyl.

Davon bevorzugt ist Methyl, Ethyl, Hexyl, 2-Ethylhexyl, Benzyl, Furfuryl oder Tetrahydrofurfuryl. Besonders bevorzugt ist Benzyl.

Ein solches Diamin verfügt über eine primäre und eine sekundäre Amingruppe. Es ermöglicht Addukte mit besonders niedriger Viskosität und/oder besonders hohem Polymergehalt.

Bevorzugt hat das Isocyanatgruppen-haltige Polymer ein mittleres Molekulargewicht Mₙ von 1'000 bis 15'000 g/mol, insbesondere 1'500 bis 10'000 g/mol.

Bevorzugt weist das Isocyanatgruppen-haltige Polymer einen NCO-Gehalt von 1.5 bis 6 Gewichts-%, bevorzugt 2 bis 5 Gewichts-%, auf. Der NCO-Gehalt wird insbesondere bestimmt durch Umsetzung der Isocyanatgruppen mit einem Überschuss Dibutylamin und Rücktitration des nicht umgesetzten Dibutylamins mit wässriger Salzsäure.

Bevorzugt hat das Isocyanatgruppen-haltige Polymer eine mittlere Isocyanat-Funktionalität von 1.8 bis 4, besonders bevorzugt 1.9 bis 3, insbesondere 2 bis 3.

Bevorzugt beträgt der Gehalt an Polybutadien-Ketten im Isocyanatgruppen-haltigen Polymer 30 bis 90 Gewichts-%, bevorzugt 30 bis 70 Gewichts-%, insbesondere 40 bis 60 Gewichts-%. Ein solches Polymer ist besonders gut verträglich in Epoxidharz-Zusammensetzungen und ermöglicht eine besonders hohe Schlagzähigkeit.

Die Polybutadien-Ketten enthalten mehrheitlich Strukturelemente der Formel (IV) und gegebenenfalls Strukturelemente der Formel (V) und/oder (VI).

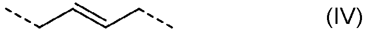

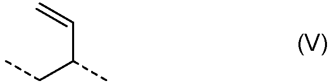

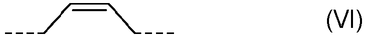

In einer bevorzugten Ausführungsform der Erfindung enthält das Isocyanatgruppen-haltigen Polymer neben Polybutadien-Ketten zusätzlich Polyether-Ketten, insbesondere Poly(oxy-1,4-butylen)-Ketten. Ein solches Addukt ist besonders gut verträglich mit Epoxidharz-Zusammensetzungen.

Ein besonders bevorzugtes Isocyanatgruppen-haltiges Polymer enthält Polybutadien-Ketten und Poly(oxy-1,4-butylen)-Ketten im Gewichtsverhältnis 30/70 bis 70/30, insbesondere 40/60 bis 60/40, und ist insbesondere frei von weiteren Polymerketten.

Bevorzugt ist das Isocyanatgruppen-haltige Polymer bei Raumtemperatur flüssig, insbesondere mit einer Viskosität bei 20 °C von 5 bis 500 Pa s, bevorzugt 10 bis 300 Pa s, insbesondere 20 bis 150 Pa s, gemessen mittels Kegel-Platten Viskosimeter mit Kegeldurchmesser 10 mm, Kegelwinkel 1°, Kegelspitze-Platten-Abstand 0.05 mm und Scherrate 10 s⁻¹.

Bevorzugt ist das Isocyanatgruppen-haltige Polymer ein Umsetzungsprodukt von mindestens einem monomeren Diisocyanat mit mindestens einem Polybutadienpolyol und gegebenenfalls mindestens einem weiteren Polyol in einem molaren NCO/OH-Verhältnis von mindestens 1.5, bevorzugt mindestens 1.8, bevorzugt unter Ausschluss von Feuchtigkeit bei 20 bis 160 °C, insbesondere 40 bis 140 °C, gegebenenfalls in Anwesenheit eines geeigneten Katalysators.

Bevorzugt liegt das molare NCO/OH-Verhältnis im Bereich von 1.5/1 bis 2.5/1, insbesondere 1.8/1 bis 2.5/1.

Bevorzugt ist das monomere Diisocyanat ausgewählt aus der Liste bestehend aus 1,5-Pentandiisocyanat (PDI), 1,6-Hexandiisocyanat (HDI), 2,2(4),4-Trimethyl-1,6-hexandiisocyanat (TMDI), 1-Methyl-2,4(6)-diisocyanatocyclohexan, Isophorondiisocyanat (IPDI), 4,4'-Diisocyanatodicyclohexylmethan (MDI), 4(2),4'-Diphenylmethandiisocyanat (MDI) und 2,4(6)-Toluendiisocyanat (TDI).

Besonders bevorzugt ist HDI oder IPDI, insbesondere bevorzugt ist IPDI.

Ein geeignetes Polybutadienpolyol ist insbesondere erhältlich durch Polymerisation von 1,3-Butadien und Allylalkohol in einem geeigneten Verhältnis, oder durch Oxidation von geeigneten Polybutadienen.

Bevorzugt weist das Polybutadienpolyol ein mittleres Molekulargewicht Mₙ von 1'000 bis 4'000 g/mol, insbesondere 2'500 bis 3'000 g/mol, auf. Weiterhin bevorzugt weist das Polybutadienpolyol eine mittlere OH-Funktionaltiät von 2 bis 3 auf.

Ein besonders geeignetes Polybutadienpolyol ist Poly bd^{®} R45 HTLO (von Resin Solutions).

Bevorzugt ist bei der Herstellung des Isocyanatgruppen-haltigen Polymers zusätzlich zu mindestens einem Polybutadienpolyol mindestens ein weiteres Polyol vorhanden, bevorzugt mindestens ein Polyetherpolyol mit einem mittleren Molekulargewicht Mₙ von 800 bis 4'000 g/mol, insbesondere mindestens ein Poly(oxy-1,4-butylen)diol mit einem mittleren Molekulargewicht Mₙ von 1'500 bis 2'500 g/mol.

Bevorzugt ist ein Gewichtsverhältnis zwischen dem Polybutadienpolyol und dem weiteren Polyol von 30/70 bis 70/30, insbesondere 40/60 bis 60/40.

Die Umsetzung des Diamins der Formel (I) mit dem Isocyanatgruppen-haltigen Polymer zum erfindungsgemässen Addukt erfolgt bevorzugt bei einer Temperatur von 5 bis 70 °C, insbesondere 15 bis 40 °C.

Bevorzugt wird das Diamin der Formel (I) vorgelegt und das Isocyanatgruppen-haltige Polymer unter gutem Rühren langsam zudosiert. Ebenfalls möglich ist eine Umsetzung zum Addukt in einem kontinuierlichen Verfahren.

Bevorzugt erfolgt die Umsetzung in Anwesenheit eines organischen Lösemittels. Dabei kann das Lösemittel zusammen mit dem Diamin der Formel (I) vorgelegt werden, und/oder das Isocyanatgruppen-haltige Polymer wird gelöst in einem Lösemittel zugegeben. Bevorzugt wird das Lösemittel nach der Umsetzung aus dem erhaltenen Addukt entfernt, insbesondere mittels Destillation, so dass das Addukt schliesslich weitgehend frei von organischen Lösemitteln ist.

Als Lösemittel geeignet ist insbesondere Aceton, Methylacetat, Ethylacetat oder Isopropanol.

Die Umsetzung ist abgeschlossen, wenn das Reaktionsprodukt frei ist von Isocyanatgruppen. Die Abnahme des Gehalts an Isocyanatgruppen kann insbesondere titrimetrisch oder mittels Infrarotspektroskopie verfolgt werden.

Aus der Umsetzung wird das erfindungsgemässe Amin-funktionelle Addukt erhalten. Es enthält wie bereits erwähnt typischerweise ein Gemisch aus nicht umgesetztem Diamin der Formel (I) und adduktierten Molekülen, bei welchen Diamine der Formel (I) über Harnstoff-Bindungen an Isocyanatgruppen adduktiert sind.

Überraschenderweise hat sich gezeigt, dass das Amin-funktionelle Addukt bei der Verwendung in Epoxidharz-Zusammensetzungen eine besonders hohe Schlagzähigkeit bei hoher Festigkeit ermöglicht.

Bevorzugt hat das Amin-funktionelle Addukt ein mittleres Aminwasserstoff-Equivalentgewicht von 80 bis 800 g/eq, bevorzugt 120 bis 600 g/eq, insbesondere 140 bis 400 g/eq. Dabei kann das Aminwasserstoff-Equivalentgewicht aus dem Diamin der Formel (I) und dem NCO-Gehalt des Isocyanatgruppen-haltigen Polymers berechnet werden.

Bevorzugt ist das Addukt bei Raumtemperatur flüssig. Insbesondere weist das Addukt eine Viskosität bei 25 °C von 10 bis 500 Pa·s, bevorzugt 50 bis 400 Pa·s, auf, gemessen mittels Kegel-Platten Viskosimeter mit Kegeldurchmesser 10 mm, Kegelwinkel 1°, Kegelspitze-Platten-Abstand 0.05 mm und Scherrate 10 s⁻¹ Bevorzugt enthält das Addukt bezogen auf 100 Gewichtsteile Reaktionsprodukt aus Diamin der Formel (I) und Isocyanatgruppen-haltigem Polymer weniger als 5 Gewichtsteile, bevorzugt weniger als 1 Gewichtsteil, insbesondere weniger 0.5 Gewichtsteile, organische Lösemittel mit einem Siedepunkt bei Normaldruck von weniger als 250 °C.

Ein weiterer Gegenstand der Erfindung ist ein Verfahren zur Herstellung des Amin-funktionellen Addukts umfassend die Schritte
(i) Vorlegen des Diamins der Formel (I),
(ii) Zugeben des Isocyanatgruppen-haltigen Polymers,
(iii) Umsetzen bis alle Isocyanatgruppen abreagiert sind,
wobei die Umsetzung bevorzugt in Gegenwart eines organischen Lösemittels erfolgt und das Lösemittel nach der Umsetzung bevorzugt mittels eines geeigneten Verfahrens, insbesondere mittels Destillation, aus dem erhaltenen Reaktionsprodukt entfernt wird.

Bevorzugt wird das Isocyanatgruppen-haltigen Polymer in Schritt (ii) unter gutem Rühren langsam zudosiert. Dabei ist das Isocyanatgruppen-haltige Polymer bevorzugt mit einem organischen Lösemittel verdünnt.

Die Umsetzung in Schritt (iii) erfolgt bevorzugt bei einer Temperatur von 5 bis 70 °C, insbesondere 15 bis 40 °C.

Das Amin-funktionelle Addukt ist vorteilhaft verwendbar zum Aushärten von Verbindungen mit mindestens zwei gegenüber Aminen reaktiven Reaktivgruppen.

Ein weiterer Gegenstand der Erfindung ist die Verwendung des beschriebenen Amin-funktionellen Addukts als Härter in einer härtbaren Zusammensetzung enthaltend Reaktivgruppen ausgewählt aus Epoxidgruppe, Isocyanatgruppe, (Meth)acrylatgruppe, 1,3-Ketoestergruppe und Carbonsäureanhydridgruppe.

Als Epoxidgruppe bevorzugt sind Glycidylethergruppen, insbesondere von handelsüblichen Epoxidharzen.

Als Isocyanatgruppe bevorzugt sind aliphatisch gebundene Isocyanatgruppen, insbesondere von 1,5-Pentandiisocyanat (HDI), 1,6-Hexandiisocyanat (HDI), Isophorondiisocyanat (IPDI), Perhydro-2,4(6)-toluendiisocyanat (H₆TDI), Perhydro-4,4'-diphenylmethandiisocyanat (H₁₂MDI), 2,2(4),4-Trimethyl-1,6-hexandiisocyanat (TMDI), Cyclohexan-1,3-diisocyanat, Cyclohexan-1,4-diisocyanat, 1,3-Bis(isocyanatomethyl)cyclohexan, 1,4-Bis(isocyanatomethyl)cyclohexan, m-Xylendiisocyanat oder p-Xylendiisocyanat. Besonders bevorzugt sind Oligomere von HDI.

Als (Meth)acrylatgruppen bevorzugt sind solche mehrfunktioneller Acrylate und Methacrylate, insbesondere Acrylate und Methacrylate von aliphatischen Polyethern, Polyestern, Novolaken, Phenolen, aliphatischen oder cycloaliphatischen Alkoholen, Glykolen und Polyesterglykolen sowie mono- und polyalkoxylierten Derivaten der vorgenannten Verbindungen, beispielsweise Ethylenglykoldi(meth)acrylat, Triethylenglykol-di(meth)acrylat, Tetraethylenglykol-di(meth)-acrylat, Tripropylenglykol-di(meth)acrylat, Polyethylenglykol-di(meth)acrylat, Polypropylenglykol-di(meth)acrylat, 1,4-Butandiol-di(meth)acrylat, 1,6-Hexandioldi(meth)acrylat, Neopentylglykol-di(meth)acrylat, Trimethylolpropan-tri(meth)-acrylat, Pentaerithritol-tetra(meth)acrylat, Dipentaerithritol-tetra(meth)acrylat, Dipentaerithritol-penta(meth)acrylat, Dipentaerithritol-hexa(meth)acrylat, sowie Tris-(2-hydroxyethyl)-isocyanurat-tri(meth)acrylat, Tris-(2-hydroxyethyl)-cyanurattri(meth)acrylat oder N,N',N"-Tris-(meth)acryloyl-perhydrotriazin, sowie Addukte von Epoxidharzen mit Acryl- und Methacrylsäure oder (Meth)acrylat-terminierte Polyurethanpolymere.

Als 1,3-Ketoestergruppe bevorzugt sind Acetoacetatgruppen, insbesondere Polyacetoacetate von handelsüblichen Diolen, Triolen oder Tetrolen wie insbesondere Diethylenglykol, Triethylenglykol, Dipropylenglykol, Tripropylenglykol, 1,4-Butandiol, 2-Methyl-1,3-propandiol, 1,5-Pentandiol, Neopentylglykol, 1,6-Hexandiol, 1,8-Octandiol, 2-Ethyl-1,3-hexandiol, 1,10-Decandiol, 1,12-Dodecandiol, Polytetrahydrofurandiole, 1,3-Cyclohexandimethanol, 1,4-Cyclohexandimethanol, 1,1,1-Trimethylolpropan, Glycerin, Pentaerythrit, propoxyliertes und/oder ethoxyliertes Glycerin, propoxyliertes und/oder ethoxyliertes 1,1,1-Trimethylolpropan, Poly(oxy-1,2-propylen)diole, EO-terminierte Poly(oxy-1,2-propylen)diole, Di- oder Trimerfettsäure-basierte Polyesterpolyole, Rizinusöl, Derivate von Rizinusöl oder hydroxylierte Pflanzenöle.

Als Carbonsäureanhydridgruppe geeignet sind insbesondere solche cyclischer Anhydride von Polycarbonsäuren, insbesondere von Pyromellitsäuredianhydrid.

Besonders bevorzugt wird das Amin-funktionelle Addukt verwendet als Härter in einer härtbaren Zusammensetzung enthaltend Epoxidgruppen. Es ermöglicht dabei Epoxidharz-Produkte mit guter Verarbeitbarkeit bei Umgebungstemperaturen, hoher Festigkeit und besonders hoher Schlagzähigkeit.

Ein weiterer Gegenstand der Erfindung ist somit ein Härter für Epoxidharze enthaltend das beschriebene Amin-funktionelle Addukt.

Bevorzugt enthält der Härter mindestens ein weiteres Amin mit mindestens drei Aminwasserstoffen. Bevorzugt ist ein solches weiteres Amin verschieden von demjenigen Diamin der Formel (I), welches zur Herstellung des Addukts eingesetzt wurde.

Geeeignet als weiteres Amin mit mindestens drei Aminwasserstoffen sind handelsübliche Polyamine mit aliphatisch gebundenen Amingruppen, wie sie üblicherweise zum Aushärten von Epoxidharzen eingesetzt werden.

Bevorzugt sind die bereits genannten Diamine der Formel (I), sowie weiterhin Diethylentriamin (DETA), Triethylentetramin (TETA), Tetraethylenpentamin (TEPA), Dipropylentriamin (DPTA), N-(2-Aminoethyl)-1,3-propandiamin (N3-Amin), N,N'-Bis(3-aminopropyl)1,2-ethandiamin (N4-Amin), Bis(1,6-hexylen)triamin (BHMT), N-2-Benzylaminoethyl-N'-2-aminoethyl-1,2-ethandiamin, N-3-Benzylaminopropyl-N'-3-aminopropyl-1,2-ethandiamin, 3-(3-(Dimethylamino)propylamino)propylamin (DMAPAPA), Phenalkamine oder Phenalkamide, welche Umsetzungsprodukte von Cardanol mit Aldehyden, insbesondere Formaldehyd, und Polyaminen darstellen, aminfunktionelle Addukte dieser Amine mit Epoxiden, sowie eine Kombinationen aus zwei oder mehr dieser Amine.

Besonders bevorzugt sind Isophorondiamin (IPDA), 1,3-Bis(aminomethyl)benzol (MXDA), 1,3-Bis(aminomethyl)cyclohexan, N-Benzyl-1,2-ethandiamin, N-2-Benzylaminoethyl-N'-2-aminoethyl-1,2-ethandiamin, N-3-Benzylaminopropyl-N'-3-aminopropyl-1,2-ethandiamin, Polyetheramine, Phenalkamine und/oder ein aminfunktionelles Addukt von N-Benzyl-1,2-ethandiamin mit einem Bisphenol A-Diglycidylether.

Insbesondere bevorzugt sind Isophorondiamin (IPDA), 1,3-Bis(aminomethyl)-benzol (MXDA), 1,3-Bis(aminomethyl)cyclohexan, Polyetheramine und/oder Phenalkamine.

Bevorzugt enthält der Härter für Epoxidharze mehr als ein zusätzliches Amin, insbesondere zwei oder drei zusätzliche Amine mit mindestens drei Aminwasserstoffen.

Bevorzugt enthält der Härter für Epoxidharze mindestens einen weiteren Inhaltsstoff ausgewählt aus Beschleunigern für die Aushärtung, Füllstoffen und Pigmenten.

Geeignete Beschleuniger für die Aushärtung sind insbesondere Phenole, PhenolHarze oder Mannich-Basen wie insbesondere 2,4,6-Tris(dimethylaminomethyl)-phenol, organische Carbonsäuren wie Salicylsäure oder 2-Nitrobenzoesäure, organische Sulfonsäuren wie Methansulfonsäure, p-Toluolsulfonsäure oder 4-Dodecylbenzolsulfonsäure, Nitrate wie insbesondere Calciumnitrat, tertiäre Amine, Imidazole, Ammoniumsalze, Amidine oder Guanidine.

Bevorzugt enthält der Härter 2,4,6-Tris(dimethylaminomethyl)phenol

Geeignete Füllstoffe sind insbesondere gemahlenes oder gefälltes Calciumcarbonat, welches gegebenenfalls mit Fettsäure, insbesondere Stearaten, beschichtet ist, Baryt, Talk, Quarzmehl, Quarzsand, Siliciumcarbid, Eisenglimmer, Dolomit, Wollastonit, Kaolin, Mica (Kalium-Aluminium-Silikat), Molekularsiebe, Aluminiumoxid, Zinkoxid, Aluminiumhydroxid, Magnesiumhydroxid, Kieselsäure, pyrogene Kieselsäure, Zement, Gips, Flugasche, Russ, Graphit, gemahlene Füllstoffe aus landwirtschaftlichen Quellen wie insbesondere Olivenkernmehl oder Nussschalenmehl, Hohlkugeln insbesondere Glaskugeln, Metall-Pulver wie Aluminium, Kupfer, Eisen, Zink, Silber oder Stahl, oder PVC-Pulver.

Geeignete Pigmente sind insbesondere Titandioxide, Eisenoxide, Chrom(III)oxide, organnische Pigmente, Russ oder Korrosionsschutzpigmente wie insbesondere Phosphate, Orthophosphate oder Polyphosphate, welche als Gegenion insbesondere Chrom, Zink, Aluminium, Kalzium, Strontium oder eine Kombination dieser Metalle enthalten.

Zusätzlich kann der Härter weitere Bestandteile enthalten, insbesondere
- weitere Amine, insbesondere Amine mit zwei Aminwasserstoffen wie insbesondere N,N'-Dibenzyl-1,2-ethandiamin, Monoamine wie insbesondere Benzylamin oder Furfurylamin, Polyamidoamine wie insbesondere Umsetzungsprodukte aus Dimerfettsäuren mit DETA, TETA oder TEPA, Mannich-Basen oder aromatische Polyamine wie insbesondere 4(2),4'-Diaminodiphenylmethan oder 2,4(6)-Toluoldiamin,
- Mercaptogruppen aufweisende Verbindungen,
- weitere Schlagzähmodifikatoren wie insbesondere aminfunktionelle Butadiene,
- oberflächenaktive Additive, insbesondere Entschäumer, Entlüfter, Netzmittel, Dispergiermittel oder Verlaufsmittel,
- Lösemittel oder Verdünner, insbesondere Benzylalkohol, styrolisiertes Phenol, 2-Phenoxyethanol, 2-Benzyloxyethanol, phenolgruppenhaltige aromatische Kohlenwasserstoffharze, Diisopropylnaphthalin, Isopropylbiphenyle, Cardanol oder Phenol-Formaldehyd-Novolake.

Bevorzugt enthält der Härter für Epoxidharze weniger als 5 Gewichts-%, insbesondere weniger als 1 Gewichts-%, organische Lösemittel mit einem Siedepunkt bei Normaldruck von weniger als 250 °C bezogen auf den gesamten Härter. Bevorzugt enthält der Härter für Epoxidharze weniger als 10 Gewichts-% Wasser bezogen auf den gesamten Härter.

Bevorzugt hat der Härter für Epoxidharze bezogen auf das Gesamtgewicht aller Aminwasserstoff-haltigen Bestandteile ein Aminwasserstoff-Equivalentgewicht von 50 bis 140 g/eq, bevorzugt 60 bis 130 g/eq, insbesondere 80 bis 120 g/eq.

Bevorzugt wird der Härter in einer solchen Menge eingesetzt, dass das molare Verhältnis der Aminwasserstoffe zu den Epoxidgruppen im Bereich von 0.5 bis 1.5, insbesondere 0.8 bis 1.2, liegt.

Der Härter für Epoxidharze ermöglicht Epoxidharz-Produkte mit guter Verarbeitbarkeit, schneller Aushärtung, hoher Festigkeit und besonders hoher Schlagzähigkeit.

Ein weiterer Gegenstand der Erfindung ist eine Epoxidharz-Zusammensetzung umfassend mindestens ein Epoxidharz und mindestens das beschriebene Aminfunktionelle Addukt oder den beschriebenen Härter für Epoxidharze enthaltend das beschriebene Amin-funktionelle Addukt.

Ein geeignetes Epoxidharz wird insbesondere erhalten aus der Reaktion von Epichlorhydrin mit Polyolen, Polyphenolen oder Aminen oder aus der Oxidation von Olefinen.

Bevorzugt sind aromatische Epoxidharze, insbesondere die Glycidylether von
- Bisphenol A, Bisphenol F oder Bisphenol A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- oder 2,2'-Hydroxyphenylmethan,
- Dihydroxybenzol-Derivaten wie Resorcin, Hydrochinon oder Brenzkatechin,
- weiteren Bisphenolen oder Polyphenolen wie Bis(4-hydroxy-3-methylphenyl)-methan, 2,2-Bis(4-hydroxy-3-methylphenyl)propan (Bisphenol C), Bis(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol B), 3,3-Bis(4-hydroxyphenyl)pentan, 3,4-Bis(4-hydroxyphenyl)hexan, 4,4-Bis(4-hydroxyphenyl)heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)cyclohexan (Bisphenol Z), 1,1-Bis(4-hydroxyphenyl)-3,3,5-trimethylcyclohexan (Bisphenol TMC), 1,1-Bis(4-hydroxyphenyl)-1-phenylethan, 1,4-Bis[2-(4-hydroxyphenyl)-2-propyl]-benzol (Bisphenol P), 1,3-Bis[2-(4-hydroxyphenyl)-2-propyl]benzol (Bisphenol M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon,
- Novolaken, welche insbesondere Kondensationsprodukte von Phenol oder Kresolen mit Formaldehyd bzw. Paraformaldehyd oder Acetaldehyd oder Crotonaldehyd oder Isobutyraldehyd oder 2-Ethylhexanal oder Benzaldehyd oder Furfural sind,
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylenbis(1-methylethyliden)]bisanilin (Bisanilin P) oder 4,4'-[1,3-Phenylen-bis(1-methylethyliden)]bisanilin (Bisanilin M).

Weitere geeignete Epoxidharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂- bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol A-, F- oder A/F-Flüssigharz, beziehungsweise die Glycidylisierungsprodukte von hydriertem Bisphenol A, F oder A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Weitere geeignete Epoxidharze sind solche aus der Umsetzung von biobasierten hydroxyfunktionellen Rohstoffen mit Epichlorhydrin, insbesondere Vanillin-basierte Epoxidharze wie insbesondere Diglycidylether von Vanillinalkohol, oder Glycerolbasierte Epoxidharze.

Bevorzugt ist das Epoxidharz ein Flüssigharz oder eine Mischung enthaltend zwei oder mehr Epoxid-Flüssigharze.

Als "Epoxid-Flüssigharz" wird ein technisches Polyepoxid mit einer Glasübergangstemperatur unterhalb von 25°C bezeichnet.

Gegebenenfalls werden zusätzlich Anteile von Epoxid-Festharz mitverwendet.

Als Epoxidharz bevorzugt sind aromatische Epoxid-Flüssigharze, insbesondere Bisphenol A-Diglycidylether, Bisphenol F-Diglycidylether oder Phenol-Formaldehyd Novolak-Glycidylether, oder Mischungen davon, insbesondere ein Gemisch aus Bisphenol A-Diglycidylether und Bisphenol F-Diglycidylether. Solche Epoxidharze sind sehr reaktiv, hydrophob und weisen eine für Epoxidharze niedrige Viskosität auf. Sie ermöglichen eine gute Verarbeitbarkeit, eine schnelle Aushärtung und hohe Haftkräfte.

Bevorzugt sind aromatische Epoxid-Flüssigharze mit einem mittleren Epoxid-Equivalentgewicht von 150 bis 250 g/eq, insbesondere Bisphenol A- und/oder Bisphenol F-Diglycidylether.

Zusätzlich zum Epoxidharz kann mindestens ein Epoxidgruppen-haltiger Reaktivverdünner enthalten sein.

Dafür geeignet sind insbesondere 1,4-Butandioldiglycidylether, 1,6-Hexandioldiglycidylether, Trimethylolpropandi- oder -triglycidylether, Phenylglycidylether, Kresylglycidylether, Guajacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀- oder C₁₂- bis C₁₄- oder C₁₃- bis C₁₅-Alkylglycidylether.

Bevorzugt als Reaktivverdünner ist 1,4-Butandioldiglycidylether, 1,6-Hexandioldiglycidylether oder p-tert.Butylphenylglycidylether.

Die Epoxidharz-Zusammensetzung kann weitere Bestandteile enthalten, insbesondere
- weitere Schlagzähmodifikatoren wie insbesondere Umsetzungsprodukte von hydrophoben Polyolen oder Isocyanatgruppen-haltigen Polymeren mit Epoxidharzen oder Isocyanatgruppen-haltige Polymere mit blockierten Isocyanatgruppen, insbesondere mit Cardanol-blockierten Isocyanatgruppen,
- weitere Reaktivverdünner, insbesondere epoxidiertes Sojaöl oder Leinöl, Acetoacetatgruppen aufweisende Verbindungen, Butyrolakton, Carbonate, Aldehyde, Isocyanate oder Reaktivgruppen aufweisende Silikone,
- Füllstoffe, insbesondere die bereits genannten,
- Pigmente, insbesondere die bereits genannten,
- oberflächenaktive Additive, insbesondere Entschäumer, Entlüfter, Netzmittel, Dispergiermittel, Verlaufsmittel oder dispergierte Paraffinwachse,
- Lösemittel oder Verdünner, insbesondere die bereits genannten,
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere chlorsulfonierte Polyethylene oder Fluor-haltige Polymere oder Sulfonamid-modifizierte Melamine,
- Fasern, insbesondere Glasfasern, Kohlefasern, Metallfasern, Keramikfasern oder Kunststofffasern wie Polyamidfasern oder Polyethylenfasern,
- Nanofüllstoffe, insbesondere Carbon Nanotubes,
- Rheologie-Modifizierer, insbesondere Verdicker oder Antiabsetzmittel,
- Haftverbesserer, insbesondere Organoalkoxysilane,
- flammhemmende Substanzen, insbesondere die bereits genannten Füllstoffe Aluminiumhydroxid oder Magnesiumhydroxid, Antimontrioxid, Antimonpentoxid, Borsäure (B(OH)₃), Zinkborat, Zinkphosphat, Melaminborat, Melamincyanurat, Ammoniumpolyphosphat, Melaminphosphat, Melaminpyrophosphat, polybromierte Diphenyloxide oder Diphenylether, Phosphate wie insbesondere Diphenylkresylphosphat, Resorcinol-bis(diphenylphosphat), Resorcinoldiphosphat-Oligomer, Tetraphenylresorcinoldiphosphit, Ethylendiamindiphosphat, Bisphenol-A-bis(diphenylphosphat), Tris(chloroethyl)phosphat, Tris(chloropropyl)-phosphat, Tris(dichloroisopropyl)phosphat, Tris[3-bromo-2,2-bis(bromomethyl)-propyl]phosphat, Tetrabromo-Bisphenol-A, Bis(2,3-dibromopropylether) von Bisphenol A, bromierte Epoxidharze, Ethylen-bis(tetrabromophthalimid), Ethylen-bis(dibromonorbornandicarboximid), 1,2-Bis(tribromophenoxy)ethan, Tris(2,3-dibromopropyl)isocyanurat, Tribromophenol, Hexabromocyclododecan, Bis(hexachlorocyclopentadieno)cyclooctan oder Chlorparaffine, oder
- Stabilisatoren gegen Oxidation, Wärme, Licht oder UV-Strahlung oder Biozide.

Bevorzugt enthält die Epoxidharz-Zusammensetzung weniger als 5 Gewichts-%, insbesondere weniger als 1 Gewichts-%, organische Lösemittel mit einem Siedepunkt bei Normaldruck von weniger als 250 °C bezogen auf die gesamte Epoxidharz-Zusammensetzung.

Bevorzugt enthält die Epoxidharz-Zusammensetzung weniger als 5 Gewichts-%, Wasser bezogen auf die gesamte Epoxidharz-Zusammensetzung.

Bevorzugt liegt das molare Verhältnis der Aminwasserstoffe zu den Epoxidgruppen in der Epoxidharz-Zusammensetzung im Bereich von 0.5 bis 1.5, insbesondere 0.8 bis 1.2.

Bevorzugt liegt das Gewichtsverhältnis zwischen dem Amin-funktionellen Addukt und Epoxidharzen in der Epoxidharz-Zusammensetzung im Bereich von 5/95 bis 70/30, bevorzugt 7/93 bis 50/50, insbesondere 10/90 bis 35/65. Eine solche Epoxidharz-Zusammensetzung verfügt über eine hohe Festigkeit und hohe Schlagzähigkeit.

Bevorzugt umfasst die Epoxidharz-Zusammensetzung eine Harz-Komponente und eine Härter-Komponente, welche jeweils für sich allein lagerstabil sind und in voneinander getrennten Gebinden gelagert werden. Zum Gebrauch der Epoxidharz-Zusammensetzung werden die Harz- und die Härter-Komponente kurz vor oder während der Applikation miteinander vermischt, womit die Aushärtung beginnt.

Dabei umfasst die Harz-Komponente mindestens ein Epoxidharz, gegebenenfalls mindestens einen Epoxidgruppen-haltigen Reaktivverdünner und gegebenenfalls weitere mit Aminwasserstoffen reaktive Bestandteile, und die Härter-Komponente umfasst das Amin-funktionelle Addukt und gegebenenfalls weitere mit Epoxidgruppen reaktive Bestandteile, insbesondere weitere Amine mit mindestens drei Aminwasserstoffen. Weitere Bestandteile der Epoxidharz-Zusammensetzung wie Füllstoffe, Pigmente, Beschleuniger oder oberflächenaktive Additive können als Bestandteil der Harz- oder der Härter-Komponente oder als Bestandteil der Harz- und der Härter-Komponente vorliegen.

Die Harz- und die Härter-Komponente der Epoxidharz-Zusammensetzung werden in voneinander getrennten Gebinden gelagert. Die Komponenten sind lagerstabil, das heisst, sie können vor ihrer Anwendung während mehreren Monaten bis zu einem Jahr und länger aufbewahrt werden, ohne dass sie sich in ihren jeweiligen Eigenschaften in einem für ihren Gebrauch relevanten Ausmass verändern.

Ein geeignetes Gebinde zum Lagern der Harz- oder der Härter-Komponente ist insbesondere ein Fass, ein Hobbock, ein Beutel, ein Eimer, eine Büchse, eine Kartusche oder eine Tube.

Die Harz- und die Härter-Komponente werden kurz vor oder während der Applikation vermischt. Das Mischungsverhältnis wird bevorzugt so gewählt, dass das molare Verhältnis der gegenüber Epoxidgruppen reaktiven Gruppen zu den Epoxidgruppen im Bereich von 0.5 bis 1.5, insbesondere 0.8 bis 1.2, liegt. In Gewichtsteilen liegt das Mischungsverhältnis zwischen der Harz- und der Härter-Komponente typischerweise im Bereich von 1:2 bis 20:1.

Das Vermischen der Komponenten erfolgt mittels eines geeigneten Verfahrens, insbesondere mittels Statikmischer oder einem dynamischen Mischer. Das Vermischen kann kontinuierlich oder batchweise erfolgen.

Das Mischen und die Applikation können bei Umgebungstemperatur erfolgen, welche typischerweise im Bereich von 5 bis 45 °C, bevorzugt bei 10 bis 35 °C, liegt.

Erfolgt das Mischen der Komponenten vor der Applikation, so muss darauf geachtet werden, dass zwischen dem Mischen der Komponenten und der Applikation nicht zu viel Zeit vergeht und die Applikation innerhalb der Topfzeit erfolgt.

Mit dem Mischen der Inhaltsstoffe beziehungsweise der Komponenten beginnt die Aushärtung der Epoxidharz-Zusammensetzung durch chemische Reaktion. Die Aminwasserstoffe aus dem erfindungsgemässen Addukt und gegebenenfalls vorhandenen weiteren Aminen und gegebenenfalls vorhandene weitere gegenüber Epoxidgruppen reaktive Gruppen reagieren mit den Epoxidgruppen unter deren Ringöffnung. Als Ergebnis hauptsächlich dieser Reaktionen polymerisiert die Zusammensetzung und härtet dadurch aus.

Die Aushärtung erstreckt sich typischerweise über einige Stunden bis Tage. Die Dauer hängt unter anderem von der Temperatur, der Reaktivität der Bestandteile, deren Stöchiometrie und gegebenenfalls vorhandenen Beschleunigern ab.

Die Aushärtung kann bei Umgebungsbedingungen erfolgen, insbesondere bei 5 bis 45 °C, bevorzugt bei 10 bis 35 °C, oder sie kann durch Erwärmen beschleunigt und/oder vervollständigt werden, insbesondere durch Erwärmen auf eine Temperatur von 50 bis 130 °C, bevorzugt 70 bis 120 °C, bevorzugt während 5 Minuten bis 24 Stunden, insbesondere während 30 Minuten bis 4 Stunden.

Die Applikation der Epoxidharz-Zusammensetzung erfolgt bevorzugt auf mindestens ein Substrat.

Geeignete Substrate sind insbesondere
- Glas, Glaskeramik, Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- faserverstärkte Kunststoffe, wie Kohlefaser-verstärkte Kunststoffe (CFK), Glasfaser-verstärkte Kunststoffe (GFK), Naturfaser-verstärkte Kunststoffe (NFK) und Sheet Moulding Compounds (SMC);
- Isoliermaterialen, insbesondere Schäume, insbesondere aus EPS, XPS, PUR, PIR, Aerogel oder geschäumtes Glas (Foamglas), oder Fasern aus Steinwolle oder Glaswolle,
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke.

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt werden können zwei gleichartige oder zwei verschiedene Substrate.

Aus der Applikation und Aushärtung wird die ausgehärtete Epoxidharz-Zusammensetzung erhalten. Diese zeichnet sich durch eine gute Verarbeitbarkeit, eine hohe Festigkeit und eine besonders hohe Schlagzähigkeit aus.

Die Epoxidharz-Zusammensetzung eignet sich für eine Vielzahl von Verwendungen. Sie insbesondere geeignet als Klebstoff, Giessharz, Beschichtung oder Spachtelmasse.

Besonders geeignet ist die Epoxidharz-Zusammensetzung als Klebstoff.

Ein solcher Epoxidharz-Klebstoff ist besonders geeignet für Verklebungen, bei welchen eine hohe Festigkeit und hohe Schlagzähigkeit oder Crashfestigkeit gefordert ist.

Der Epoxidharz-Klebstoff hat bevorzugt eine pastöse Konsistenz.

Bevorzugt lässt sich der Klebstoff aus einer Doppelkartusche mit getrennten Kammern für die Harz- und die Härter-Komponente durch einen aufgesetzten Statikmischer applizieren. Dabei ist es vorteilhaft, wenn der Klebstoff eine niedrige Viskosität aufweist. Weiterhin bevorzugt weist ein solcher Klebstoff ein Mischungsverhältnis in Volumen zwischen der Harz- und der Härter-Komponente von ungefähr 1:1 auf. Ein solcher Klebstoff ist besonders einfach mittels Doppelkartusche und aufgesetztem Statikmischer verarbeitbar.

Das Amin-funktionelle Addukt ermöglicht Epoxidharz-Zusammensetzungen, insbesondere Epoxidharz-Klebstoffe, mit guter Verarbeitbarkeit und hoher Schlagzähigkeit bei hoher Festigkeit.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.
"AHEW" steht für das Aminwasserstoff-Equivalentgewicht
"EEW" steht für das Epoxid-Equivalentgewicht.

### Beschreibung der Messmethoden:

Die **Viskosität** wurde auf einem thermostatisierten Kegel-Platten-Viskosimeter Rheotec RC30 (Kegeldurchmesser 10 mm, Kegelwinkel 1°, Kegelspitze-Platten-Abstand 0.05 mm, Scherrate 10 s⁻¹) gemessen.

**Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen. Die Absorptionsbanden sind in Wellenzahlen (cm⁻¹) angegeben.

### Verwendete Substanzen und Abkürzungen:

| | |
|---|---|
| 1922A: | Polyetheramin, AHEW 55 g/eq (4,7,10-Trioxatridecan-1,13-diamin, Ancamine^{®} 1922A, von Evonik) |
| EC-280: | Polyetheramin, AHEW 51 g/eq (4,9-Dioxadodecan-1,12-diamin, Baxxodur^{®} EC 280, von BASF) |
| TMD: | 2,2(4),4-Trimethylhexamethylendiamin, AHEW 39.6 g/eq (Vestamin^{®} TMD, von Evonik) |
| BAC: | 1,3-Bis(aminomethyl)cyclohexan, AHEW 35.5 g/eq (von Mitsubishi Gas Chemical) |
| D-230: | Polyoxypropylendiamin, mittleres Molekulargewicht Mₙ ca. 240 g/mol, AHEW 60 g/eq (Jeffamine^{®} D-230, von Huntsman) |
| MXDA: | 1,3-Bis(aminomethyl)benzol, 136.2 g/mol, AHEW 34 g/eq (von Mitsubishi Gas Chemical) |
| B-EDA: | N-Benzyl-1,2-ethandiamin, AHEW 50.1 g/eq, hergestellt wie nachfolgend beschrieben |
| BADGE: | Bisphenol A-Diglycidylether (Araldite^{®} GY-250, EEW 188 g/eq, von Huntsman) |

**B-EDA** (N-Benzyl-1,2-ethandiamin) wurde hergestellt, indem 180.3 g 1,2-Ethandiamin mit einer Lösung aus 106.0 g Benzaldehyd in 1200 ml Isopropanol vermischt, 2 Stunden bei Raumtemperatur gerührt und anschliessend bei 80°C, 80 bar Wasserstoff-Druck und einem Fluss von 5 ml/min auf einer kontinuierlich arbeitenden Hydrierapparatur mit Pd/C-Festbettkatalysator hydriert wurden. Anschliessend wurde die hydrierte Lösung am Rotationsverdampfer eingeengt, wobei unreagiertes 1,2-Ethandiamin, Wasser und Isopropanol entfernt wurden. Die so erhaltene Reaktionsmischung wurde bei 80°C unter Vakuum mittels Destillation gereinigt, wobei eine farblose Flüssigkeit mit einem mittels GC bestimmten Gehalt an N-Benzyl-1,2-ethandiamin von > 97% erhalten wurde.

### Herstellung von Isocyanatgruppen-haltigen Polymeren:

### Polymer P-1:

300 g Polybutadienpolyol (Poly bd^{®} R45 HTLO, mittleres Molekulargewicht Mₙ ca. 2'800 g/mol, mittlere OH-Funktionalität ca. 2.5, OH-Zahl 47 mg KOH/g, von Resin Solutions), 300 g Poly(oxy-1,4-butylen)diol (polyTHF, Terathane^{®} 2000, OH-Zahl 56 mg KOH/g, von Invista) und 137.8 g 4,4'-Diphenylmethandiisocyanat (Desmodur^{®} 44 MC L, von Covestro) wurden bei 80 °C nach bekanntem Verfahren zu einem Polymer mit einer Viskosität bei 20 °C von 97.9 Pa s und einem NCO-Gehalt von 3.0 Gewichts-% umgesetzt. Es weist einen berechneten Gehalt an Polybutadien-Ketten von 40.7 Gewichts-% auf.

### Polymer P-2:

727 g Polyoxypropylendiol (Acclaim^{®} 4200, OH-Zahl 28 mg KOH/g, von Covestro) und 273 g 4,4'-Diphenylmethandiisocyanat (Desmodur^{®} 44 MC L, von Covestro) wurden bei 80 °C nach bekanntem Verfahren zu einer Reaktionsmischung mit einem NCO-Gehalt von 7.6 Gewichts-% umgesetzt. Anschliessend wurden die flüchtigen Bestandteile, insbesondere monomeres 4,4'-Diphenylmethandiisocyanat, in einem Kurzwegverdampfer destillativ entfernt (Manteltemperatur 180 °C, Druck 0.1 bis 0.005 mbar), wobei ein Polymer mit einer Viskosität bei 20 °C von 17.4 Pa s und einem NCO-Gehalt von 1.8 Gewichts-% erhalten wurde.

### Polymer P-3:

725 g Ethylenoxid-terminiertes Polyoxypropylentriol (Desmophen^{®} 5031 BT, OH-Zahl 28.0 mg KOH/g, OH-Funktionalität ca. 2.3, von Covestro) und 275 g 4,4'-Diphenylmethandiisocyanat (Desmodur^{®} 44 MC L, von Covestro) wurden bei 80 °C nach bekanntem Verfahren zu einer Reaktionsmischung mit einem NCO-Gehalt von 7.6 Gewichts-% umgesetzt. Anschliessend wurden die flüchtigen Bestandteile, insbesondere nicht umgesetztes 4,4'-Diphenylmethandiisocyanat, in einem Kurzwegverdampfer destillativ entfernt (Manteltemperatur 180 °C, Druck 0.1 bis 0.005 mbar), wobei ein Polymer mit einer Viskosität bei 20 °C von 25.1 Pa s und einem NCO-Gehalt von 1.6 Gewichts-% erhalten wurde.

### Polymer P-4:

818 g Polyoxypropylendiol (Acclaim^{®} 4200, OH-Zahl 28 mg KOH/g, von Covestro) und 227 g Isophorondiisocyanat (Vestanat^{®} IPDI, von Evonik) wurden bei 80 °C nach bekanntem Verfahren zu einer Reaktionsmischung mit einem NCO-Gehalt von 6.6 Gewichts-% umgesetzt. Anschliessend wurden die flüchtigen Bestandteile, insbesondere nicht umgesetztes Isophorondiisocyanat, in einem Kurzwegverdampfer destillativ entfernt (Manteltemperatur 160 °C, Druck 0.1 bis 0.005 mbar), wobei ein Polymer mit einer Viskosität bei 20 °C von 12.7 Pa s und einem NCO-Gehalt von 1.9 Gewichts-% erhalten wurde.

Das Polymer **P-1** ist ein Isocyanatgruppen-haltiges Polymer mit einem berechneten Gehalt an Polybutadien-Ketten von 40.7 Gewichts-%. Die Polymere **P-2, P-3** und **P-4** sind frei von Polybutadien-Ketten und dienen als Vergleich.

### Herstellung von Amin-funktionellen Addukten:

### Addukte N-1 bis N-7 und R-1 bis R-6:

Die in den Tabellen 1 und 2 angegebene Menge (in Gewichtsteilen) des angegebenen Diamins wurde vorgelegt und bei Raumtemperatur in Gegenwart von 700 ml Ethylacetat mit der angegebenen Menge (in Gewichtsteilen) des angegebenen Isocyanatgruppen-haltigen Polymers umgesetzt, bis mittels IR-Spektroskopie keine Isocyanatgruppen mehr nachweisbar waren. Anschliessend wurde das Ethylacetat am Rotationsverdampfer entfernt.

Die Eigenschaften der Addukte sind in den Tabellen 1 und 2 angegeben.

Das AHEW der Addukte wurde berechnet, wobei für Addukte von Polyaminen mit einer primären und einer sekundären Amingruppe angenommen wurde, dass ungefähr die Hälfte der Anzahl umgesetzter Amingruppen primäre Amingruppen und die andere Hälfte sekundäre Amingruppen waren.

Die mit **"(Ref.)"** bezeichneten Addukte **R-1** bis **R-6** sind Vergleichsbeispiele ohne Polybutadien-Ketten.

**Tabelle 1: Amin-funktionelle Addukte N-1 bis N-7.**

| **Addukt** | **N-1** | **N-2** | **N-3** | **N-4** | **N-5** | **N-6** | **N-7** |
|---|---|---|---|---|---|---|---|
| Polymer **P-1** | 75.0 | 75.0 | 75.0 | 75.0 | 75.0 | 75.0 | 75.0 |
| 1922A | 25.0 | - | - | - | - | - | - |
| EC-280 | - | 25.0 | - | - | - | - | - |
| TMD | - | - | 25.0 | - | - | - | - |
| BAC | - | - | - | 25.0 | - | - | - |
| MXDA | - | - | - | - | 25.0 | - | - |
| D-230 | - | - | - | - | - | 25.0 | - |
| B-EDA | - | - | - | - | - | - | 25.0 |
| Viskosität (25°C) [Pa·s] | 193 | 107 | 220 | 318 | 252 | 299 | 101 |
| AHEW [g/eq] | 288 | 261 | 191 | 168 | 154 | 323 | 241 |

**Tabelle 2: Amin-funktionelle Addukte R-1 bis R-6.**

| **Addukt** | **R-1 (Ref.)** | **R-2 (Ref.)** | **R-3 (Ref.)** | **R-4 (Ref.)** | **R-5 (Ref.)** | **R-6 (Ref.)** |
|---|---|---|---|---|---|---|
| Polymer **P-2** | 75.0 | 75.0 | - | - | 88.0 | - |
| Polymer **P-3** | - | - | - | 75.0 | - | - |
| Polymer **P-4** | - | - | 75.0 | - | - | 88.0 |
| 1922A | 25.0 | - | - | - | - | - |
| MXDA | - | 25.0 | 25.0 | - | - | - |
| D-230 | - | - | - | 25.0 | - | - |
| B-EDA | - | - | - | - | 12.0 | 12.0 |
| Viskosität (25°C) [Pa·s] | 3.1 | 8.9 | 5.3 | 7.2 | 69 | 39 |
| AHEW [g/eq] | 253 | 149 | 150 | 281 | 534 | 546 |

### Verwendung in Epoxidharz-Zusammensetzungen,

### Zusammensetzung Z1 bis Z4:

Für jede Zusammensetzung wurde die in Tabelle 3 angegebene Menge Bisphenol A-Diglycidylether (in Gewichtsteilen) als Harz-Komponente eingesetzt. Weiter wurde das in Tabelle 3 angegebene Addukt und MXDA in den angegebenen Mengen (in Gewichtsteilen) vermischt, unter Ausschluss von Feuchtigkeit aufbewahrt und als Härter-Komponente eingesetzt.

Anschliessend wurden die beiden Komponenten jeder Zusammensetzung mittels eines Zentrifugalmischers zu einer homogenen Flüssigkeit verarbeitet und diese unverzüglich folgendermassen geprüft:
Die **Viskosität (5')** wurde 5 min nach dem Vermischen der Harz- und der Härter-Komponente gemessen.
Die **Gelierzeit** wurde bestimmt, indem eine frisch vermischte Menge von ca. 3 g im Normklima mit einem Spatel in regelmässigen Abständen bewegt wurde, bis die Masse gelierte.
Die mechanischen Eigenschaften **Zugfestigkeit, Bruchdehnung** und **E-Modul 0.5-1%** wurden bestimmt, indem die vermischte Zusammensetzung in einer

Silikonform zu hantelförmigen Prüfkörpern (Dicke 2 mm, Länge 75 mm, Steglänge 30 mm, Stegbreite 4 mm) gehärtet, diese dann aus der Form gelöst und gemäss EN ISO 527 bei einer Zuggeschwindigkeit von 10 mm/min geprüft wurden. Die vermischte Zusammensetzung wurde vor der Prüfung entweder während 7 Tagen im Normklima aufbewahrt, oder sie wurde während 24 h im Normklima gefolgt von 24 h bei 80 °C gefolgt von 3 Tagen im Normklima aufbewahrt. Die Resultate sind entsprechend mit dem Zusatz **"7d NK"** oder **"24h NK + 24h 80°C"** gekennzeichnet. Der **Tg**-Wert (Glasübergangstemperatur) wurde mittels DSC an wie oben für die Bestimmung der mechanischen Eigenschaften beschrieben ausgehärteten Proben bestimmt. Die Messung erfolgte mit einem Mettler Toledo DSC 3+ 700 Gerät und dem Messprogramm (1) -10 °C während 2 min, (2) -10 bis 200 °C mit einer Aufheizrate von 10 K/min (= 1st run), (3) 200 bis -10 °C mit einer Kühlrate von -50 K/min, (4) -10 °C während 2 min, (5) -10 bis 180 °C mit einer Aufheizrate von 10 K/min (= 2nd run).

Die Resultate sind in Tabelle 3 angegeben.

**Tabelle 3: Zusammensetzung und Eigenschaften von Z1 bis Z4.**

| **Zusammensetzung** | **Z1** | **Z2** | **Z3** | **Z4** |
|---|---|---|---|---|
| **Harz-Komponente:** | | | | |
| BADGE | 188 | 188 | 188 | 188 |
| **Härter-Komponente:** | | | | |
| Addukt | **N-1** | **N-2** | **N-3** | **N-4** |
| | 70.0 | 70.0 | 70.0 | 70.0 |
| MXDA | 25.8 | 24.9 | 21.5 | 19.8 |
| Viskosität (5') (20°C) [Pa·s] | 16.8 | 11.2 | 16.1 | 23.2 |
| Gelierzeit [h:min] | 2:30 | 1:20 | 1:10 | 1:20 |
| *7d NK:* | | | | |
| Zugfestigkeit [MPa] | 26.3 | 28.0 | 28.2 | 31.8 |
| Bruchdehnung [%] | 42 | 32 | 13 | 24 |
| E-Modul 0.5-1% [MPa] | 1317 | 1440 | 1508 | 1591 |
| Tg 1st / 2nd run [°C] | 45 / 99 | 51 / 98 | 51 / 99 | 57 / 124 |
| *24h NK* + *24h 80°C:* | | | | |
| Zugfestigkeit [MPa] | 36.3 | 38.6 | 38.4 | 41.1 |
| Bruchdehnung [%] | 12 | 13 | 11 | 10 |
| E-Modul 0.5-1% [MPa] | 1245 | 1340 | 1425 | 1460 |
| Tg 1st / 2nd run [°C] | 53 / 107 | 53 / 104 | 55 / 113 | 103 / 123 |

### Zusammensetzungen Z5 bis Z17: (Epoxidharz-Klebstoffe)

Es wurde eine Harz-Komponente hergestellt, indem die folgenden Inhaltsstoffe in den angegebenen Mengen (in Gewichtsteilen, GT) vermischt und unter Ausschluss von Feuchtigkeit aufbewahrt wurden: 40 GT Bisphenol A-Diglycidylether (Epikote^{®} 828 LVEL, von Westlake Epoxy), 16 GT Bisphenol F-Diglycidylether (Epikote^{®} 862, von Westlake Epoxy), 6 GT Butandiol-Diglycidylether (Araldite^{®} DY-D, von Huntsman), 20 GT Umsetzungsprodukt **U1,** hergestellt wie nachfolgend beschrieben, 1 GT 3-Glycidoxypropyltrimethoxysilan, 12 GT Füllstoffe und 5 GT pyrogene Kieselsäure.

Das **Umsetzungsprodukt U1** wurde hergestellt durch Umsetzung von 5687 g Polyetherdiol (Acclaim^{®} 4200, OH-Zahl 28 mg KOH/g, von Covestro), 712 g 4,4'-Diphenylmethandiisocyanat (Desmodur^{®} 44 MC L, von Covestro) bei 80 °C bis zu einem konstanten NCO-Gehalt von 1.9 Gew.%, gefolgt von der Umsetzung mit Cardanol (Cardolite^{®} NC-700, von Cardolite) während 2 h bei 80 °C, bis im FT-IR keine Isocyanatgruppen mehr nachweisbar waren.

Weiter wurde je eine Härter-Komponente hergestellt, indem die folgenden Inhaltsstoffe in den angegebenen Mengen (in Gewichtsteilen, GT) vermischt und unter Ausschluss von Feuchtigkeit aufbewahrt wurden: 14 GT modifiziertes Polyamin (Ancamine^{®} 2712M, AHEW 95 g/eq, von Evonik), 6 GT Polyetheramin (Jeffamine^{®} D-230, AHEW 60 g/eq, von Huntsman), 6 GT Phenalkamin (Cardolite^{®} LITE 2002, AHEW 104 g/eq, von Cardolite), 5 GT 2,4,6-Tris(dimethylaminomethyl)phenol (Ancamine^{®} K54, von Evonik), 44 GT Füllstoffe, 6 GT Pigmente, 4 GT pyrogene Kieselsäure und 15 GT des in Tabelle 4 angegebenen Addukts.

Anschliessend wurden die beiden Komponenten jeder Zusammensetzung im in Tabellen 4 angegebenen Mischungsverhältnis mittels eines Zentrifugalmischers zu einer homogenen Flüssigkeit verarbeitet und diese unverzüglich folgendermassen geprüft:
Die mechanischen Eigenschaften **Zugfestigkeit, Bruchdehnung** und **E-Modul 0.25%** (bei 0.05 bis 0.25 % Dehnung) wurden bestimmt, indem die vermischte Zusammensetzung während 7 Tagen im Normklima in einer Silikonform zu hantelförmigen Prüfkörpern (Dicke 1 mm, Länge 75 mm, Steglänge 30 mm, Stegbreite 4 mm) gehärtet, diese dann aus der Form gelöst und gemäss EN ISO 527 bei einer Zuggeschwindigkeit von 2 mm/min geprüft wurden.

Als Mass für die Schlagzähigkeit wurde der dynamische Widerstand in einer **Impact Peel** Prüfung gemäss ISO 11343 bestimmt. Dazu wurden Prüfkörper mit zwei verklebten elektrolytisch verzinkten DC04 Stahlplättchen 90 x 20 x 0.8 mm hergestellt mit einer Klebefläche von 20 x 30 mm bei einer Klebstoffdicke von 0.3 mm. Die Aushärtung erfolgte entweder für 7 Tage im Normklima, in Tabelle 3 angegebene mit **"7d NK",** oder die Aushärtung erfolgte für 1 h im Normklima gefolgt von 1 h bei 80 °C gefolgt von 1 Tag im Normklima, in Tabelle 3 angegeben mit **"1h 80°C".** Die Messung des Schlagschälwiderstands (Impact Peel) erfolgte mit einer Schlaggeschwindigkeit von 2 m/s.

Die Resultate sind in Tabelle 4 angegeben.

Die mit **"(Ref.)"** bezeichneten Zusammensetzungen sind Vergleichsbeispiele.

**Tabelle 4: Zusammensetzung und Eigenschaften von Z5 bis Z16. ¹ Harz-Komponente / Härter-Komponente (Gewicht)**

| **Zusammensetzung** | **Z5** | **Z6** | **Z7** | **Z8** | **Z9** | **Z10** | **Z11** |
|---|---|---|---|---|---|---|---|
| eingesetztes Addukt | **N-1** | **N-2** | **N-3** | **N-4** | **N-5** | **N-6** | **N-7** |
| Mischungsverhältnis¹ | 100 / 102 | 100 / 101 | 100 / 95 | 100 / 93 | 100 / 79 | 100 / 105 | 100 / 94 |
| Zugfestigkeit [MPa] | 23.9 | 24.5 | 24.0 | 23.4 | 27.1 | 25.1 | 23.9 |
| Bruchdehnung [%] | 3.2 | 4.1 | 4.0 | 3.0 | 3.2 | 4.0 | 3.6 |
| E-Modul 0.25% [MPa] | 1860 | 1500 | 1810 | 1670 | 2180 | 2120 | 1850 |
| **7d NK:** | | | | | | | |
| Impact Peel [N/mm] | 20.4 | 21.4 | 16.1 | 13.0 | 11.3 | 9.6 | 8.2 |
| **1h 80°C:** | | | | | | | |
| Impact Peel [N/mm] | 24.2 | 25.6 | 23.7 | 19.0 | 16.4 | 16.4 | 14.0 |

**Tabelle 4: (Fortsetzung)**

| **Zusammensetzung** | **Z12 (Ref.)** | **Z13 (Ref.)** | **Z14 (Ref.)** | **Z15 (Ref.)** | **Z16 (Ref.)** | **Z17 (Ref.)** |
|---|---|---|---|---|---|---|
| eingesetztes Addukt | **R-1** | **R-2** | **R-3** | **R-4** | **R-5** | **R-6** |
| Mischungsverhältnis¹ | 100 / 100 | 100 / 90 | 100 / 90 | 100 / 102 | 100 / 110 | 100 / 110 |
| Zugfestigkeit [MPa] | 18.1 | 18.1 | 22.6 | 16.4 | 18.3 | 13.7 |
| Bruchdehnung [%] | 2.0 | 1.8 | 4.4 | 1.8 | 4.2 | 2.3 |
| E-Modul 0.25% [MPa] | 1820 | 1720 | 2030 | 1865 | 1600 | 1260 |
| **7d NK:** | | | | | | |
| Impact Peel [N/mm] | 4.0 | 4.6 | 5.8 | 4.2 | 9.6 | 7.2 |
| **1h 80°C:** | | | | | | |
| Impact Peel [N/mm] | 6.8 | 6.4 | 9.8 | 5.9 | 8.4 | 6.3 |

Aus der Tabelle 4 ist ersichtlich, dass die Zusammensetzungen **Z5** bis **Z11** mit jeweils einem erfindungsgemässen Addukt eine hohe Schlagzähigkeit (Impact Peel) aufwiesen, insbesondere nach Aushärtung während 1 Stunde bei 80 °C, höher als die Vergleichs-Zusammensetzungen **Z12 (Ref.)** bis **Z17 (Ref.)** mit jeweils Addukten ohne Polybutadien-Ketten.

### Verwendung als Härter für Acetoacetate:

### Zusammensetzung Z18:

100 Gewichtsteile Addukt **N-1** wurden mit 31.5 Gewichtsteilen **Triacetoacetat-1,** dessen Herstellung nachfolgend beschrieben ist, mittels eines Zentrifugalmischers vermischt und wie folgt geprüft:
Die **Gelierzeit** wurde bestimmt, indem eine frisch vermischte Menge von ca. 3 g im Normklima mit einem Spatel in regelmässigen Abständen bewegt wurde, bis die Masse gelierte.
Die **Shore** Härte wurde nach DIN 53505 an während 7 Tagen im Normklima gehärteten Prüfkörpern (Durchmesser 20 mm, Dicke 5 mm) bestimmt.
Die Gelierzeit betrug 10 min.
Die Shore A Härte betrug 25.
Die ausgehärtete Zusammensetzung war gummiartig fest und hatte eine klebfreie Oberfläche.
Das **Triacetoacetat-1** wurde hergestellt, indem 50 g (0.49 mol OH) propoxyliertes 1,1,1-Trimethylolpropan (Desmophen^{®} 4011 T, OH-Zahl 550 mg KOH/g, von Covestro) mit 67 g (0.52 mol) Ethylacetoacetat und 0.1 g Tetra-n-butyltitanat (Tyzor^{®} TnBT, von Dorf Ketal) versetzt und unter Vakuum und Entfernung der flüchtigen Bestandteile bei einer Temperatur von 80 bis 140 °C umgesetzt wurden. Erhalten wurde eine klare, farblose Flüssigkeit mit einer Viskosität bei 20 °C von 0.8 Pa s und einem berechneten Acetoacetat-Equivalentgewicht von 186 g/eq.

## Patentansprüche

1. Amin-funktionelles Addukt erhalten aus der Umsetzung von
- mindestens einem Diamin der Formel (I), 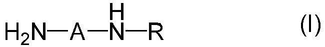 wobei A für einen gegebenenfalls Ether-Sauerstoff enthaltenden zweiwertigen Kohlenwasserstoffrest mit 2 bis 25 C-Atomen steht und R für H oder für einen einwertigen, gegebenenfalls Sauerstoffatome enthaltenden Kohlenwasserstoffrest mit 1 bis 12 C-Atomen steht,
mit
- mindestens einem Isocyanatgruppen-haltigen Polymer mit einem mittleren Molekulargewicht Mₙ von mindestens 1'000 g/mol und einem Gehalt an Polybutadien-Ketten bezogen auf das Isocyanatgruppen-haltige Polymer von mindestens 20 Gewichts-%
in einem Verhältnis der Anzahl Mol Diamin der Formel (I) pro Molequivalent Isocyanatgruppen von mindestens 1.3.

2. Addukt gemäss Anspruch 1, **dadurch gekennzeichnet, dass** das Verhältnis der Anzahl Mol Diamin der Formel (I) pro Molequivalent Isocyanatgruppen bei 1.5 bis 15, bevorzugt 1.6 bis 10, insbesondere 1.7 bis 7, liegt.

3. Addukt gemäss einem der Ansprüche 1 oder 2, **dadurch gekennzeichnet, dass** das Diamin der Formel (I) ausgewählt ist aus der Liste bestehend aus 1,5-Diamino-2-methylpentan, 1,6-Hexandiamin, 1,7-Heptandiamin, 1,8-Octandiamin, 2,5-Dimethyl-1,6-hexandiamin, 1,9-Nonandiamin, 2,2(4),4-Trimethylhexan-1-6-diamin, 1,10-Decandiamin, 1,3-Bis(aminomethyl)-cyclohexan, 1,4-Bis(aminomethyl)cyclohexan, 1,2-Diaminocyclohexan, 1,3-Diaminocyclohexan, 1,4-Diaminocyclohexan, Isophorondiamin, 2(4)-Methyl-1,3-diaminocyclohexan, 2,5(2,6)-Bis(aminomethyl)bicyclo[2.2.1]heptan, Bis-(4-aminocyclohexyl)methan, 1,3-Bis(aminomethyl)benzol, 3,6-Dioxaoctan-1,8-diamin, 4,7-Dioxadecan-1,10-diamin, 4,9-Dioxadodecan-1,12-diamin, 4,7,10-Trioxatridecan-1,13-diamin, Polyoxypropylendiaminen mit mittlerem Molekulargewicht Mₙ von 200 bis 500 g/mol, N-Benzyl-1,2-ethandiamin, N-Furfuryl-1,2-ethandiamin, N-Tetrahydrofurfuryl-1,2-ethandiamin, N-Benzyl-1,3-bis(aminomethyl)benzol und N-Cyclohexyl-1,3-propandiamin.

4. Addukt gemäss einem der Ansprüche 1 bis 3, **dadurch gekennzeichnet, dass** R in Formel (I) für H steht.

5. Addukt gemäss einem der Ansprüche 1 bis 4, **dadurch gekennzeichnet, dass** das Isocyanatgruppen-haltige Polymer einen NCO-Gehalt von 1.5 bis 6 Gewichts-%, bevorzugt 2 bis 5 Gewichts-%, aufweist.

6. Addukt gemäss einem der Ansprüche 1 bis 5, **dadurch gekennzeichnet, dass** das Isocyanatgruppen-haltige Polymer ein Umsetzungsprodukt von mindestens einem monomeren Diisocyanat mit mindestens einem Polybutadienpolyol und gegebenenfalls mindestens einem weiteren Polyol in einem molaren NCO/OH-Verhältnis von mindestens 1.5, bevorzugt mindestens 1.8, ist.

7. Addukt gemäss Anspruch 6, **dadurch gekennzeichnet, dass** das Polybutadienpolyol ein mittleres Molekulargewicht Mₙ von 1'000 bis 4'000 g/mol, bevorzugt 2'500 bis 3'000 g/mol, und eine mittlere OH-Funktionalität von 2 bis 3 aufweist.

8. Addukt gemäss einem der Ansprüche 6 oder 7, **dadurch gekennzeichnet, dass** zusätzlich zu mindestens einem Polybutadienpolyol mindestens ein weiteres Polyol vorhanden ist, bevorzugt mindestens ein Polyetherpolyol mit einem mittleren Molekulargewicht Mₙ von 800 bis 4'000 g/mol, insbesondere mindestens ein Poly(oxy-1,4-butylen)diol mit einem mittleren Molekulargewicht Mₙ von 1'500 bis 2'500 g/mol.

9. Addukt gemäss einem der Ansprüche 1 bis 8, **dadurch gekennzeichnet, dass** das Addukt ein mittleres Aminwasserstoff-Equivalentgewicht von 80 bis 800 g/eq, bevorzugt 120 bis 600 g/eq, insbesondere 140 bis 400 g/eq, hat.

10. Verfahren zur Herstellung des Addukts gemäss einem der Ansprüche 1 bis 9, umfassend die Schritte
(i) Vorlegen des Diamins der Formel (I),
(ii) Zugeben des Isocyanatgruppen-haltigen Polymers,
(iii) Umsetzen bis alle Isocyanatgruppen abreagiert sind,
wobei die Umsetzung bevorzugt in Gegenwart eines organischen Lösemittels erfolgt und das Lösemittel nach der Umsetzung bevorzugt mittels eines geeigneten Verfahrens, insbesondere mittels Destillation, aus dem erhaltenen Reaktionsprodukt entfernt wird.

11. Verwendung des Addukts gemäss einem der Ansprüche 1 bis 9 als Härter in einer härtbaren Zusammensetzung enthaltend Reaktivgruppen ausgewählt aus Epoxidgruppe, Isocyanatgruppe, (Meth)acrylatgruppe, 1,3-Ketoestergruppe und Carbonsäureanhydridgruppe.

12. Härter für Epoxidharze enthaltend das Addukt gemäss einem der Ansprüche 1 bis 9.

13. Härter gemäss Anspruch 12, **dadurch gekennzeichnet, dass** mindestens ein weiteres Amin mit mindestens drei Aminwasserstoffen enthalten ist.

14. Härter gemäss einem der Ansprüche 12 oder 13, **dadurch gekennzeichnet, dass** mindestens ein weiterer Inhaltsstoff ausgewählt aus Beschleunigern für die Aushärtung, insbesondere 2,4,6-Tris(dimethylaminomethyl)phenol, Füllstoffen und Pigmenten enthalten ist.

15. Epoxidharz-Zusammensetzung umfassend mindestens ein Epoxidharz und mindestens ein Addukt gemäss einem der Ansprüche 1 bis 9 oder den Härter für Epoxidharze gemäss einem der Anspruche 12 bis 14.

16. Epoxidharz-Zusammensetzung gemäss Anspruch 15, **dadurch gekennzeichnet, dass** das Gewichtsverhältnis zwischen dem Amin-funktionellen Addukt und Epoxidharzen im Bereich von 5/95 bis 70/30, bevorzugt 7/93 bis 50/50, insbesondere 10/90 bis 35/65, liegt.
